# EUROPEAN PATENT APPLICATION

(11) **EP 1 939 660 A2**
(43) Date of publication of application: **02.07.2008**
(21) Application number: 07301572.9
(22) Date of filing: 23.11.2007
(51) Int. Cl.: G02B 6/44

(54) **Indoor optical fiber cable**

(30) Priority: 28.11.2006 FR 0602531
(71) Applicant: Nexans, Societe Anonyme, 75008 Paris (FR)
(72) Inventor: Elisson, Peter, 50430, BORAS (SE); Emanuelsson, Viktor, 51442, LIMMARED (SE)
(74) Representative: Feray, Valérie

(57) **Abstract**

The present invention concerns an indoor optical fiber comprising at least one optical fiber, at least one strength member, and an outer jacket tightly surrounding said optical fiber and said strength member, said optical fiber and said strength member being stranded together.

## Description

The present invention relates to an indoor optical fiber cable for telecommunication data transmission.

More particularly said indoor optical fiber cable is for use in blowing, pushing or pulling installations.

Blowing installation is a suitable technique to install an optical fiber cable into a duct.

The optical fiber cable is propelled along a previsouly-installed duct by fluid drag of a gaseous medium, preferably air, blown along the duct in the desired direction.

Said blowing installation presents advantageously no stress to an interior of transmission medium of optical signals.

An optical fiber cable for use in air blowing installation method has a reduced diameter and a reduced weight.

Hence, the number of strength members are reduced and such cable are not enough rigid to have a large air resistance force in such installation.

A large air resistance is important so that the cable can easily receive propulsion force caused by air blowing.

Hence, the diameter size of cable is limited by the parameter of rigidity and thus small diameter optical fiber cable presents generally a too flexible structure, which limits its length in blowing installation.

In addition, conventional optical cables used in the pulling or pushing methods well known in the prior art are not suitable for use in air blowing installation method.

Indeed, said optical cables comprises several tensile members in order to improve the tensile force of said cable.

Thus, the diameter and the weight of said cable thus obtained increase dramatically.

Hence, it is difficult to develop and design an optical fiber cable, which has a good balance between diameter size and rigidity for blowing, pushing and pulling installations.

Then no optical fiber cable with an optimised diameter size and rigidity exists on the market that has optimized installation lengths for blowing, pushing and pulling methods.

It is an object of the present invention to overcome the drawback of the prior art in proposing an indoor optical fiber cable with a new type of structure.

In accordance with the present invention, the technical solution resides in that the indoor optical fiber cable comprises:
- two optical fibers, each optical fiber being surrounded by an outer coating,
- two strength members, each outer coating being directly in contact with two strength members, and each strength member being directly in contact with two outer coatings, and
- an outer jacket tightly surrounding said optical fibers and said strength members,
said optical fibers and said strength members being stranded together.

Said cable thus designed has an optimised structure that gives good blowing, pushing and pulling properties with improved installation performance.

In addition, such configuration presents a cable structure in which dimension and rigidity are optimized.

In another embodiment, said optical fiber and said strength member are located such that their respective longitudinal axis does not coincide with the central axis of the cable.

In a preferred embodiment, each optical fiber together with their outer coating has an identical diameter to each strength member.

This structure allows advantageously to have a symmetric cable keeping a round shape structure with a substantially circular section.

In another preferred embodiment, said strength member is a glass reinforced plastic rod.

In another embodiment, said outer jacket comprises a halogen free fire retardant material.

In another embodiment, the optical fiber cable comprises water-swellable material in the void space of said cable.

Said water-swellable material aims at protecting the optical fiber cable against water ingress and thus allows to reduce water exposure.

In another embodiment, said outer jacket comprises silicone additives.

This improves the installation lengths as it reduces the friction between the cable and the duct in providing a low friction coefficient outer jacket.

In another preferred embodiment, the diameter of said cable is inferior to 6mm.

This small diameter increases advantageously the potential installation distance and allows installation into smaller diameter ducts, ie. microducts.

Hence, that enables telecom operators to configure more flexible networks.

Another object of the present invention is to use said cable in pushing, pulling or blowing installations.

Thus said cable presents a versatile structure used advantageously in different types of indoor installations, ie. pushing, pulling or blowing installations.

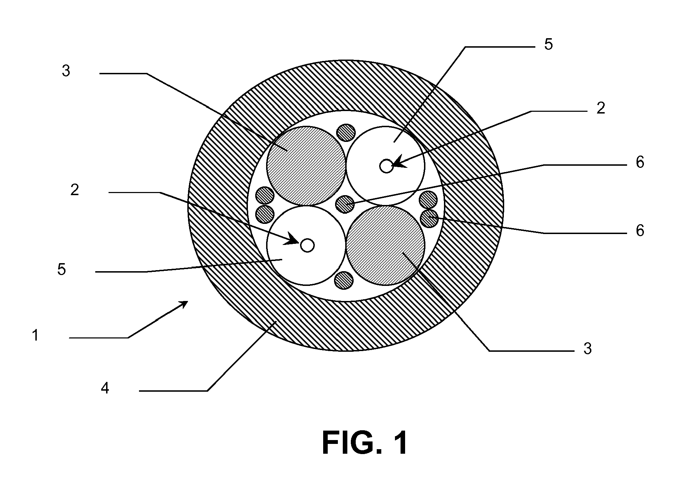

Other characteristics and advantages of the invention are described below in detail in the following description, which is given by way of nonlimiting illustration, taken in conjunction with the drawing, in which FIG. 1 is a cross sectional view of an optical fiber cable according to the present invention.

The FIG. 1 represents the preferred embodiment of an optical fiber cable of the present invention.

Said optical fiber cable 1 comprises, by way of example, two optical fibers 2 and two strength members such as glass reinforced plastic (GRP) rods 3.

An outer jacket 4 maintains tightly said optical fibers and said rods together by surrounding them.

Said optical fibers and said rods are stranded together allowing to obtain a cable 1 with a reduced diameter and with an optimised rigidity.

The stranding can be accomplished in one direction, helically, known as "S" or "Z" stranding, or reverse oscillated lay stranding, known as "S-Z" stranding or any other application stranding configuration.

The optical fiber of the present invention can be a single mode optical fiber, for example an ITU-T Recommendation G.652.D optical fiber, or a multimode optical fiber, for example an ITU-T Recommendation G.651 optical fiber.

This ITU-T G.652.D example optical fiber is generally composed of a glass core with a diameter of 9µm, surrounded by a glass cladding with an outer diameter of 125µm.

Said optical fiber comprises at least one layer of UV curable polymer composition surrounding said cladding, the outer diameter of said layer being around 250µm.

In the preferred embodiment of the present invention, said optical fiber 2 is surrounded by an outer coating 5 made from an extruded polymer or an UV-cured resin.

By a way of example, said extruded polymer is made from the polymer Hytrel obtained from DuPont.

Such outer coating 5 protects mechanically the optical fiber and results in a safe optical fiber easy to connect.

According to FIG. 1, each optical fiber 2 together with their outer coating 5 has an identical diameter to each rod 3, more particularly said diameter is of 900µm.

In this example, the nominal thickness of the outer coating 5 is around 650µm.

Hence that allows to have a symmetric cable keeping a round shape structure with a substantially circular section.

In the preferred embodiment according to FIG. 1, it is preferable to dispose fibers and rods in an alternative configuration to limit preferential bending directions of the cable.

Hence, each outer coating 5 is directly in contact with two rods 3 and each rod 3 is directly in contact with two outer coatings 5.

In addition, according to FIG. 1, each optical fiber 2 and GRP rod 3 are disposed only apart from the central axis of the cable 1, in other words no other optical fiber or strength member is coaxially disposed with the central axis of said cable.

In a preferred characteristic of the present invention, the outer jacket 4 comprises advantageously any suitable polymer known in the prior art to make a halogen free fire retardant (HFFR) material.

For example, said outer jacket is made from an extruded composition comprising a low-density polyethylene and ethyl vinyl acetate (LDPE-EVA) copolymer and a flame retardant filler.

Said flame retardant filler can be consisting of a metallic hydroxide, preferably magnesium hydroxide.

For example, the nominal thickness of the outer jacket 4 is around 800µm.

Hence, according to the diameters of the glass core, the glass cladding, the UV curable layer, the outer coating, the GRP rod, and the thickness of the outer jacket, all of said diameters being given by a way of example, the diameter of said optical fiber cable 1 is around 4mm.

The optical fiber cable 1 can comprise water-swellable material disposed in the void space of said cable, in other words the interior empty space of said cable.

According to FIG.1, water-swellable material is made for example of water-swellable yarns 6.

Said water-swellable yarns can be aramid or glass yarns impregnated with a super absorbent polymer (SAP).

More particularly, the void spaces between and around the optical fibers and strength members are filled with water-swellable yarns 6 as well as the center of said cable surrounded by fibers and rods in contact with each other.

In another embodiment, strength member can as well be surrounded by a layer of any conventional water-swellable material such as SAP.

Although the preferred embodiment of the present invention has been disclosed for illustrative purposes, it is of course understood that departures can be made from this preferred embodiment by those of ordinary skill in the art without departing from the scope of the invention.

## Claims

1. An indoor optical fiber cable (1) comprising:
- two optical fibers (2), each optical fiber being surrounded by an outer coating (5),
- two strength members (3), each outer coating (5) being directly in contact with two strength members (3), and each strength member (3) being directly in contact with two outer coatings (5), and
- an outer jacket tightly surrounding said optical fibers (2) and said strength members (3),
said optical fibers (2) and said strength members (3) being stranded together.

2. Cable according to claim 1, **characterized in that** said optical fiber (2) and said strength member (3) are located such that their respective longitudinal axis does not coincide with the central axis of the cable (1).

3. Cable according to claim 1 or 2, **characterized in that** each optical fiber (2) together with their outer coating (5) has an identical diameter to each strength member (3).

4. Cable according to anyone of claims 1 to 3, **characterized in that** said strength member (3) is a glass reinforced plastic rod.

5. Cable according to anyone of claims 1 to 4, **characterized in that** said outer jacket (4) comprises a halogen free fire retardant material.

6. Cable according to anyone of claims 1 to 5, **characterized in that** it comprises water-swellable material (6) in the void space of said cable.

7. Cable according to anyone of claims 1 to 6, **characterized in that** said outer jacket (4) comprises silicone additives.

8. Cable according to anyone of claims 1 to 7, **characterized in that** the diameter of said cable (1) is inferior to 6mm.

9. Use of a cable according to claims 1 to 8 in pushing, pulling or blowing installations.
